# EUROPEAN PATENT SPECIFICATION

(11) **EP 3 489 166 B1**
(45) Date of publication and mention of the grant of the patent: **09.12.2020**
(21) Application number: 17203103.1
(22) Date of filing: 22.11.2017
(51) Int. Cl.: B65D 41/26, B65D 47/12, G01F 19/00

(54) **DISPENSER FOR DRY FOODSTUFF**
SPENDER FÜR TROCKENE LEBENSMITTEL
DISTRIBUTEUR DE PRODUITS ALIMENTAIRES SECS

(43) Date of publication of application: 29.05.2019
(73) Proprietor: Santa Maria AB, 431 21 Mölndal (SE)
(72) Inventor: VON MENTZER, Märta, 427 37 Billdal (SE); MINOGUE, Lisa, 121 39 Johanneshov (SE)
(74) Representative: AWA Sweden AB

(56) References cited:
- EP-A1- 1 235 721
- EP-A1- 3 187 621
- EP-A2- 0 275 833
- US-A- 5 108 009
- US-A1- 2006 032 872

## Description

### FIELD OF THE INVENTION

The present invention relates to a dispenser for dry foodstuff. It particularly relates to a dispenser for dry foodstuff having a closure arrangement.

### BACKGROUND OF THE INVENTION

Dispensers for dry foodstuff are used for a number of different products, such as spices and dried herbs. Such dispensers typically comprise a container for containing the foodstuff, and a closure arrangement. The closure arrangement is conventionally screwed onto the container. Another common type of closure arrangement is to have a top part of the closure arrangement connected to a bottom part thereof via a hinge. Regardless of the type of closure arrangement used, the container normally has an opening to allow foodstuff to be dispensed. Some dispensers are provided with a thin cover provided with one or more apertures, the thin cover being snapped onto the container so as to align the apertures with the opening of the container. Foodstuff may thus be sprinkled through the apertures. The closure arrangement will normally, when screwed onto the container, enclose the thin cover.

A drawback of conventional dispensers for dry foodstuff is that that it may be difficult to dispense the desired amount of foodstuff. This may especially be an issue if the aperture(s) in the thin cover are large relative to the size of the foodstuff to be dispensed. There is therefore a need for providing an improved dispenser for dry foodstuff which makes it easier to dispense the desired amount.

Document US2006/032872 A1 discloses a package for dispensing a granular product having a first hollow body member, a second hollow body member, and a pouring spout.

### SUMMARY OF THE INVENTION

It is an object of the present invention to alleviate at least some of the mentioned drawbacks of the prior art and to provide an improved dispenser for dry foodstuff. This and other objects, which will become apparent in the following, are accomplished by a dispenser as defined in the accompanying independent claim.

The present invention is at least based on the realisation that by providing a frame arranged along a peripheral portion of a floor of a bottom part of the closure arrangement, more accurate dosing may be achieved since the foodstuff may be dispensed onto the frame. If more foodstuff is dispensed than what is desired, the excess amount may be poured back into the container from said frame. Additionally, the present invention is also based on the realisation that by combining the frame with a separate top part of the closure arrangement, dispensing the desired amount of foodstuff may be simplified even further since the foodstuff may be dispensed into the top part. The top part may then serve as a volume measure.

The term exemplary should in this application be understood as serving as an example, instance or illustration.

According to the invention, a dispenser for dry foodstuff is provided. The dispenser comprises a container for containing said foodstuff, said container having an opening, and a closure arrangement comprising a bottom part and a top part being separable from each other. The bottom part of the closure arrangement is arranged to at least partially cover the opening of the container, and the bottom part comprises a floor having at least one aperture aligned with the opening of the container for enabling foodstuff to be dispensed through the aperture. A frame is arranged along a peripheral portion of the floor, and the top part of the closure arrangement is attachable to the bottom part in a covering state, thereby preventing foodstuff from being dispensed from the dispenser. Foodstuff is dispensable from the dispenser when the top part is removed from the bottom part.

The container may suitably be made of a transparent material, such as a plastic material or glass, for allowing the user to see how much foodstuff is left in the container. Other materials, including opaque materials, are also conceivable. The container may have a cylindrical shape with two bases, with the opening being located at one of the bases. Other shapes may also be suitable, and the container may have the shape of any conventional dispenser for dry foodstuff. The shape of the container is not considered critical for the present invention.

The closure arrangement may suitably be made of a rigid plastic material. The top part and the bottom part of the closure arrangement may be made of the same material, or they may be made of different materials. The bottom part of the closure arrangement may suitably be of a shape that fits around the opening of the container. If the container has a cylindrical shape, the bottom part of the closing arrangement may suitably have a circular cross-section.

The bottom part of the closure arrangement may be attached to the container via for example screwing or snap locking. In some embodiments, the bottom part of the closure arrangement may be permanently attached to the container, or they may be made in one piece. It is however preferred that the bottom part of the closure arrangement is separable from the container, since it allows for easier refilling of the container.

The bottom part and the top part of the closure arrangement being separable from each other should be understood as meaning that they are two separate parts which are not connected to each other via a hinge. In other words, the top part may be completely separated from the bottom part, without damaging the closure arrangement.

The at least one aperture in the floor of the bottom part of the closure arrangement may in some embodiments be a plurality of apertures. In other embodiments, it may be a single aperture. The size of the aperture(s) may suitably be adapted to the size of the foodstuff that is to be dispensed. The size of the aperture(s) may also be adapted to the normal dosage of the foodstuff.

The frame arranged along a peripheral portion of the floor may suitably form a closed path. In other words, the frame may be arranged along the whole circumferential extension of the floor, and/or may enclose the entire floor. In other embodiments, the frame may not form a closed path.

According to an exemplary embodiment of the present invention, the frame extends around the whole aperture in the floor of the bottom part. This is advantageous since it prevents foodstuff which has exited through the aperture from falling off the floor of the bottom part even when the top part of the closure arrangement is removed from its covering state.

According to the invention, the top part comprises an outer wall extending from a top surface, wherein the outer wall is in contact with the bottom part in said covering state. This is preferred since it prevents foodstuff which has exited through the aperture from leaving the closure arrangement. It also prevents any undesired material, such as dust or dirt, from entering the dispenser when the top part is arranged in the covering state.

According to the invention, the top part further comprises an inner wall extending from said top surface, forming a closed path and enclosing a volume, wherein a space is provided between the inner wall and said outer wall. According to another exemplary embodiment of the present invention, the frame, in the covering state, is arranged in the space between the inner wall and the outer wall of the top part.

According to an exemplary embodiment of the present invention, the inner wall, in the covering state, is in contact with the floor of the bottom part of the closure arrangement, to form a barrier to any foodstuff which has exited through the aperture. An advantage of this is that the foodstuff which has exited does not risk falling out from the closure arrangement when the top part is removed from its covering state.

According to an exemplary embodiment of the present invention, the volume defined by the inner wall is a volume measure, such as a teaspoon measure (typically 5 ml), into which the foodstuff may be dispensed. This is advantageous since it further enhances the user's ability to dispense the desired amount of foodstuff. In other exemplary embodiments, the volume measure may for example correspond to a tablespoon measure (typically 15 ml) or any other suitable volume measure.

According to the invention, the frame has a height which varies along the circumferential extension of the frame. This may be desired since it makes it easier for the user to see how much of the foodstuff has been dispensed and how much is lying on the frame, during dispensing. Having a height which varies may also serve the purpose of indicating for the user which way the dispenser should be directed when dispensing the foodstuff.

According to an exemplary embodiment of the present invention, the at least one aperture is a single aperture which has a centre which does not coincide with a centre of the floor of the bottom part. This is advantageous since having a single aperture located at the centre of the floor would make it more difficult to dispense the foodstuff so that some of it lands on the frame, especially when the amount of foodstuff in the container is running low.

According to an exemplary embodiment of the present invention, the bottom part comprises a plurality of apertures. Having a plurality of apertures may be suitable for some foodstuff, for example foodstuff of a relatively small size, such as finely grounded spices. If one larger aperture would be used instead of a plurality of smaller apertures, it would be more difficult to dispense a small amount of the foodstuff.

According to an exemplary embodiment of the present invention, an inner surface of the frame is at least partially curved in a cross-section, said cross-section being viewed in a plane perpendicular to said floor. The curvature may suitably be located at the portion of the frame located closest to the floor. An advantage of this is that if the angle between the frame and the floor would be perpendicular, foodstuff would more easily stick to the corner created between the floor and the frame. Having a partially curved frame prevents this, and also increases the stability of the frame.

According to an exemplary embodiment of the present invention, the top part, in the covering state, is snap locked to said bottom part. This is advantageous since it enables the user to hold the dispenser and remove the top part using only one hand. According to another exemplary embodiment of the present invention, the top part, in the covering state, is screwed to the bottom part.

These and other features and advantages of the present invention will in the following be further clarified with reference to embodiments described hereinafter.

### BRIEF DESCRIPTION OF THE DRAWINGS

This and other aspects of the present invention will now be described in more detail, with reference to the appended drawings showing exemplary embodiments of the present invention.
Figure 1a is an exploded view showing an exemplary embodiment of a dispenser for dry foodstuff according to the present invention.
Figure 1b is a perspective view showing the same exemplary embodiment of a dispenser as in Figure 1a, wherein the bottom part of the closure arrangement is attached to the container, and the top part is attached to the bottom part in a covering state.
Figures 2a-2b are perspective views of a top part of a closure arrangement according to at least one exemplary embodiment of the present invention.
Figure 2c is a side view of the same top part as is shown in Figures 2a-2b.
Figure 2d is a top view of the same top part as is shown in Figures 2a-2c.
Figure 2e is a bottom view of the same top part as is shown in Figures 2a-2d.
Figures 3a-3b are perspective views of a bottom part of a closure arrangement according to at least one exemplary embodiment of the present invention.
Figure 3c is a side view of the same bottom part as is shown in Figures 3a-3b.
Figure 3d is a front view of the same bottom part as is shown in Figures 3a-3c.
Figure 3e is a back view of the same bottom part as is shown in Figures 3a-3d.
Figure 3f is a top view of the same bottom part as is shown in Figures 3a-3e.
Figure 4a is a cross-sectional view of the same bottom part as is shown in Figures 3a-3f.
Figure 4b is a cross-sectional view of a closure arrangement according to an exemplary embodiment of the present invention, wherein the top part is attached to the bottom part in a covering state.
Figure 5 is a top view of an alternative bottom part according to another exemplary embodiment of the present invention.

### DETAILED DESCRIPTION OF EMBODIMENTS

In the following detailed description, some embodiments of the present invention will be described. However, it is to be understood that features of the different embodiments are exchangeable between the embodiments and may be combined in different ways, unless anything else is specifically indicated. Even though in the following description, numerous specific details are set forth to provide a more thorough understanding of the present invention, it will be apparent to one skilled in the art that the present invention may be practiced without these specific details. In other instances, well known constructions or functions are not described in detail, so as not to obscure the present invention.

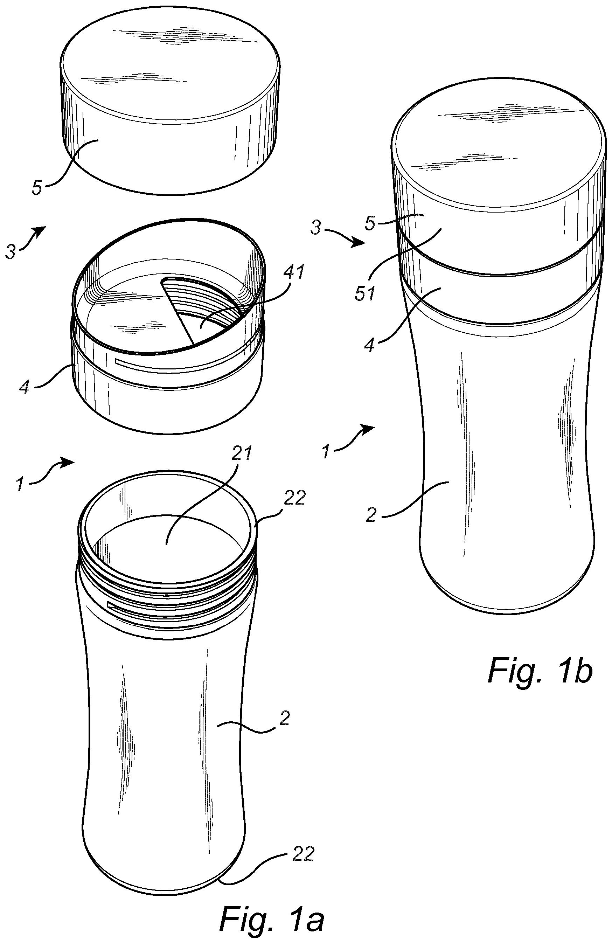

Figure 1a illustrates an exploded view of an exemplary embodiment of a dispenser 1 for dry foodstuff according to the present invention. The dispenser 1 comprises a container 2 for containing the foodstuff, and the container 2 has an opening 21. The container 2 according to the illustrated embodiment has an approximately cylindrical shape, with two circular bases 22. The illustrated container 2 is wider closer to the two bases 22 than it is at the centre of the container. Other shapes of the container 2 are also conceivable, such as strictly cylindrical or cuboid. The opening 21 in the container 2 is in this embodiment circular and covers the majority of one of the bases 22 of the container, but the opening 21 may also have other shapes and sizes. The opening 21 may suitably be as large as possible for a given size of the container 2, since it makes it easier to refill the container 2.

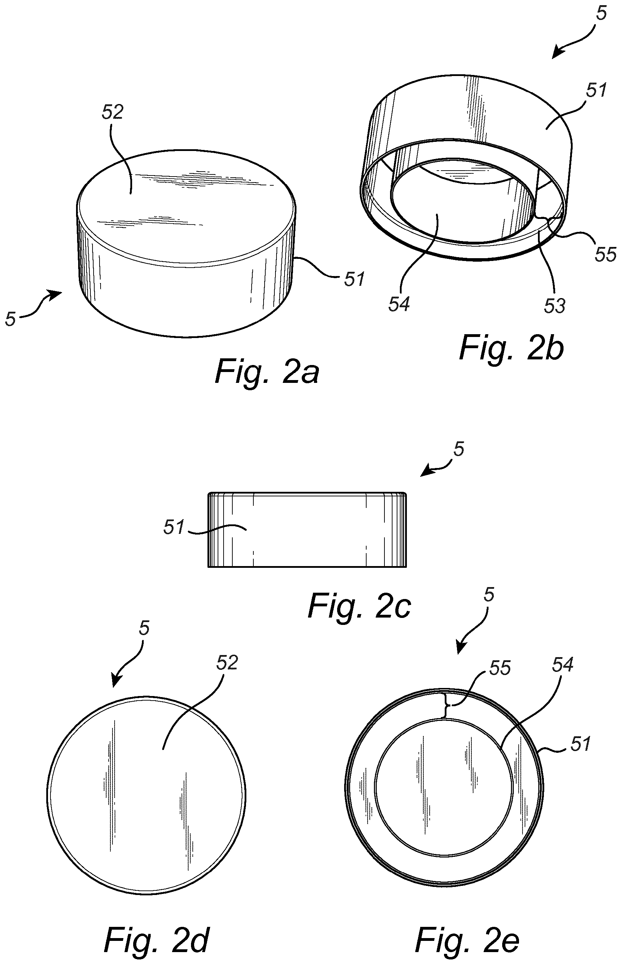

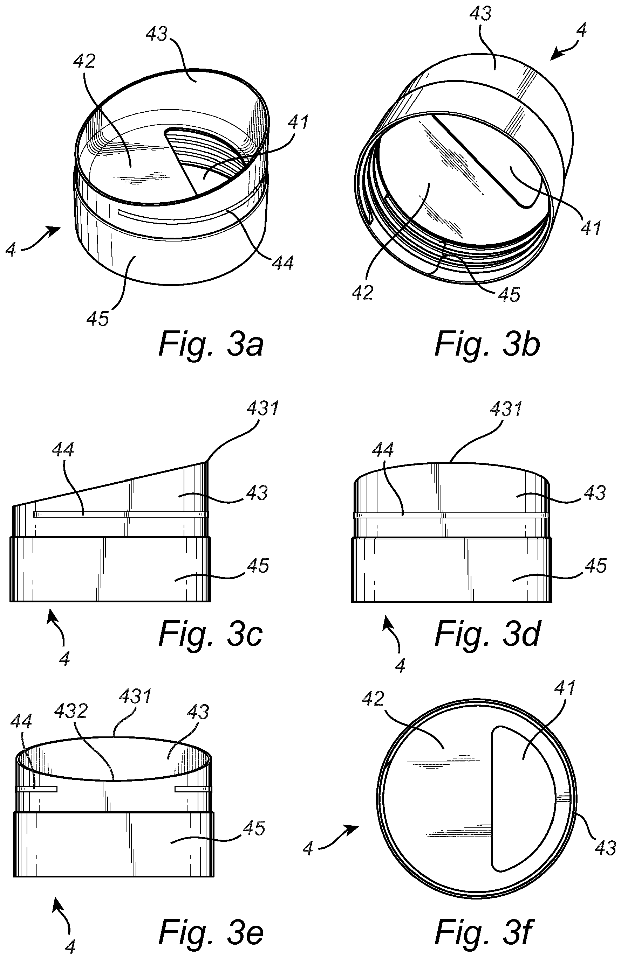

The dispenser 1 further comprises a closure arrangement 3, comprising a bottom part 4 and a top part 5. The bottom part 4 and the top part 5 are separable from each other. The bottom part 4 of the closure arrangement 3 is arranged to cover the opening 21 of the container 2, which is shown in Figure 1b. The bottom part 4 and the top part 5 of the closure arrangement 3 will be described in more detail in relation to Figures 2a-e and Figures 3a-g.

Figure 1b illustrates a perspective view of the same exemplary embodiment of a dispenser 1 as in Figure 1a, wherein the bottom part 4 of the closure arrangement 3 is attached to the container 2, and the top part 5 is attached to the bottom part 4 in a covering state. In this exemplary embodiment, the bottom part 5 is screwed onto the container 2, but other means of attachment are also conceivable. The bottom part 4 of the closure arrangement 3 is arranged so that an aperture 41 is aligned with the opening 21 of the container 2, for enabling foodstuff to be dispensed through the aperture 41. When the top part 5 of the closure arrangement 3 is attached to the bottom part 4 in a covering state, foodstuff is prevented from being dispensed from the dispenser 1. The attachment of the top part 5 to the bottom part 4 is in this embodiment achieved by snap locking. In other embodiments, the top part 5 may for example be screwed onto the bottom part 4. When the top part 5 is removed from the bottom part 4, foodstuff is dispensable from the dispenser 1.

Figures 2a-2b are perspective views of a top part 5 of a closure arrangement according to the present invention. The top part 5 comprises an outer wall 51 extending from a top surface 52. When the top part 5 is attached to the bottom part 4 in the covering state, the outer wall 51 is in contact with the bottom part 4, as can be seen in Figure 1b. On the inside of the outer wall 51, a first protrusion 53 is arranged. This protrusion 53 is arranged to enable the top part 5 of the closure arrangement to be snap locked to the bottom part 4. In this embodiment, the protrusion 53 extends parallel to the top surface 52, and along the whole circumferential extension of the outer wall 51.

In this exemplary embodiment, the top part 5 further comprises an inner wall 54 extending from the top surface 52. The inner wall 54 forms a closed path and encloses a volume, and a space 55 is provided between the inner wall 54 and the outer wall 51. The volume defined by the inner wall 54 is a volume measure, into which the foodstuff may be dispensed. In this exemplary embodiment, the volume measure is a teaspoon measure.

Figure 2c is a side view of the same top part as is shown in Figures 2a-2b. The outer wall 51 in this embodiment has a uniform height along the whole circumferential extension of the wall 51.

Figure 2d is a top view of the same top part 5 as is shown in Figures 2a-2c. The top surface 52 of the top part 5 is in this embodiment circular. In other embodiments, the top surface 52 may have other shapes.

Figure 2e is a bottom view of the same top part 5 as is shown in Figures 2a-2d. Here the space provided between the inner wall 54 and the outer wall 51 is visible. The outer wall 51 and the inner wall 54 both form closed paths, and are both circular. The inner wall 54 is centred inside of the outer wall 51.

Figures 3a-3b are perspective views of a bottom part 4 of a closure arrangement according to the present invention. The bottom part 4 comprises a floor 42 having an aperture 41. The aperture 41 in this exemplary embodiment is semi-circular, but other shapes are also conceivable. The bottom part 4 further comprises a frame 43 arranged along a peripheral portion of the floor 42. The frame 43 extends around the whole aperture 41, and in this exemplary embodiment it also extends around the whole floor 42 of the bottom part 4. On the outside of the frame 43, a protrusion 44 is arranged, extending along a portion of the circumferential extension of the frame 43, and parallel to the floor 42. This protrusion 44 is arranged to enable the top part 4 of the closure arrangement to be snap locked to the bottom part 5. The protrusion 53 of the top part may accordingly snap over the protrusion 44 of the bottom part 4.

The bottom part 4 according to this exemplary embodiment further comprises a threaded portion 45, extending from the floor 42 in the opposite direction of the frame 43. This threaded portion 45 comprises threads on the inside, to allow the bottom part 4 to be screwed onto the container 2, which has matching threads.

In the side view in Figure 3c it is shown that the frame 43 has a height which varies along the circumferential extension of the frame 43. The highest point 431 of the frame 43 is aligned with the centre of the aperture 41 in the floor 42. Figure 3d shows the frame 43 and the rest of the bottom part 4 from the front, where the highest portion 431 of the frame 43 is arranged. In Figure 3e the bottom part 4 is shown from the back, where the lowest part 432 of the frame 43 is arranged.

Figure 3f is a top view of the same bottom part 4 as is shown in Figures 3a-3e. The single aperture 41 comprised by the bottom part 4 according to this exemplary embodiment has a centre which does not coincide with a centre of the floor 42 of the bottom part 4. According to the illustrated, and other, embodiments, the geometrical placement of the aperture 41 is such that it is located between the central longitudinal geometrical axis of the container and the highest portion 431 of the frame 43. Having the aperture 41 near the highest portion 431 of the frame 43 further facilitates an accurate dispensing, and improved user controllability.

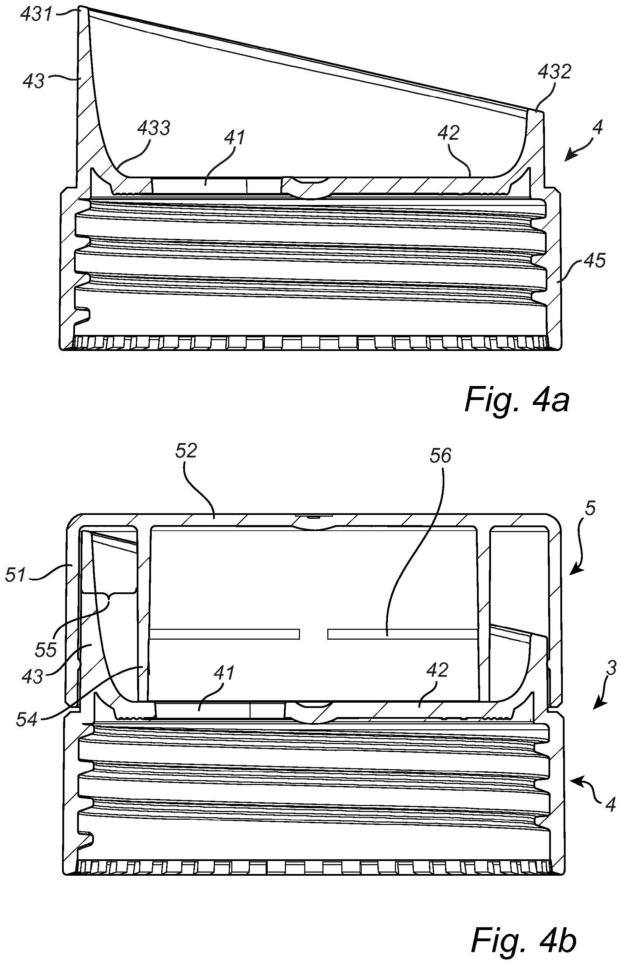

In the cross-sectional view of the bottom part 4 in Figure 4a it is shown that an inner surface of the frame 43 is at least partially curved in a cross-section, the cross-section being viewed in a plane perpendicular to the floor 42. In this exemplary embodiment, the inner surface of the frame 43 is curved at its lower portion 433, i.e. closest to the floor. In some embodiments, the inner surface of the frame 43 may be completely curved, or no portion of it may be curved.

Figure 4b is a cross-sectional view of a closure arrangement 3 according to an exemplary embodiment of the present invention, wherein the top part 5 is attached to the bottom part 4 in a covering state. Here it is shown that the frame 43, in the covering state, is arranged in the space 55 between the inner wall 54 and the outer wall 51 of the top part 5. In this embodiment, the frame 43 is not in contact with the top surface 52 of the top part 5. In other embodiments, at least a portion of the frame 43 may be in contact with the top surface 52. In some embodiments, the frame 43 may be in contact with the top surface 52 along its whole circumferential extension.

In the illustrated embodiment, the inner wall 54 of the top part 5, in the covering state, is in contact with the floor 42 of the bottom part 4 of the closure arrangement 3, to form a barrier to any foodstuff which has exited through the aperture 41. In this embodiment, the inner wall 54 is in contact with the floor 42 along the whole circumferential extension of the inner wall 54.

The illustrated exemplary embodiment of the top part 5 further comprises a marking 56, arranged on the inside of the inner wall 54 and running along the circumferential extension of the inner wall 54, parallel to the top surface 52. This marking may be used as an indicator when the volume defined by the inner wall 54 is used as a volume measure. For example, the marking 56 may indicate a teaspoon measure (5 ml), or any other volume measure. In some embodiments, the whole volume defined by the inner wall 54 may be a teaspoon measure, and the marking 56 may be arranged to indicate half a teaspoon measure (2.5 ml).

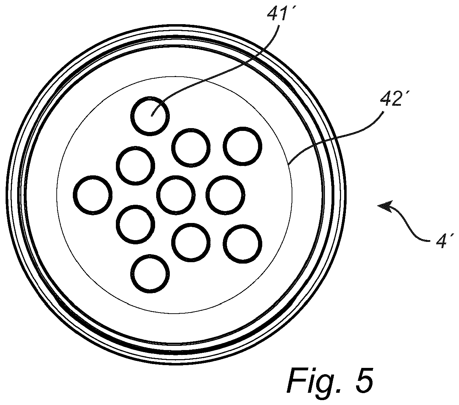

Figure 5 is a top view of an alternative bottom part 4' according to another exemplary embodiment of the present invention, wherein the bottom part 4' comprises a plurality of apertures 41'. In this exemplary embodiment, the bottom part 4' has eleven apertures 41' arranged in the floor 42', but other embodiments may have more or less apertures.

The person skilled in the art realizes that the present invention by no means is limited to the embodiments described above. The features of the described embodiments may be combined in different ways, and many modifications and variations are possible within the scope of the appended claims. For example, in some embodiments, the frame may have a uniform height, or the container and closure arrangement may have different shapes. Further, the number and size of the aperture(s) may be varied, and preferably adjusted to the foodstuff to be dispensed.

In the claims, any reference signs placed between parentheses shall not be construed as limiting to the claim. The word "comprising" does not exclude the presence of other elements than those listed in the claim. The word "a" or "an" preceding an element does not exclude the presence of a plurality of such elements.

## Claims

1. A dispenser (1) for dry foodstuff, comprising
a container (2) for containing said foodstuff, said container (2) having an opening (21), and
a closure arrangement (3) comprising a bottom part (4) and a top part (5) being separable from each other, the bottom part (4) of the closure arrangement (3) is arranged to at least partially cover the opening (21) of the container (2),
wherein the bottom part (4) comprises a floor (42) having at least one aperture (41) aligned with the opening (21) of the container (2) for enabling foodstuff to be dispensed through the aperture (41), and a frame (43) arranged along a peripheral portion of the floor (42),
wherein the top part (5) of the closure arrangement (3) is attachable to the bottom part (4) in a covering state, thereby preventing foodstuff from being dispensed from the dispenser (1),
wherein foodstuff is dispensable from the dispenser (1) when the top part (5) is removed from the bottom part (4)
wherein,
the bottom part (4) further comprises a threaded portion (45), extending from the floor (42) in the opposite direction of the frame (43), this threaded portion (45) comprises threads on the inside, to allow the bottom part (4) to be screwed onto the container (2),
wherein the frame (43) has a height which varies along the circumferential extension of the frame (43),
wherein the top part (5) comprises an outer wall (51) extending from a top surface (52), wherein the outer wall (51) is in contact with the bottom part (4) in said covering state, and wherein the top part (5) further comprises an inner wall (54) extending from said top surface (52), forming a closed path and enclosing a volume, wherein a space (55) is provided between the inner wall (54) and said outer wall (51).

2. A dispenser (1) according to claim 1, wherein the frame (43) extends around the whole aperture (41) in the floor (42) of the bottom part (4).

3. A dispenser (1) according to claim 1 or 2, wherein the frame (43), in the covering state, is arranged in the space (55) between the inner wall (54) and the outer wall (51) of the top part (5).

4. A dispenser (1) according to any one of claims 1 - 3, wherein the inner wall (54), in the covering state, is in contact with the floor (42) of the bottom part (4) of the closure arrangement (3), to form a barrier to any foodstuff which has exited through the aperture (41).

5. A dispenser (1) according to any one of claims 1 - 4, wherein the volume defined by the inner wall (54) is a volume measure, such as a teaspoon measure, into which the foodstuff may be dispensed.

6. A dispenser (1) according to any one of the preceding claims, wherein the at least one aperture (41) is a single aperture which has a centre which does not coincide with a centre of the floor (42) of the bottom part (4).

7. A dispenser (1) according to any one of claims 1-5, wherein the bottom part (4') comprises a plurality of apertures (41').

8. A dispenser (1) according to any one of the preceding claims, wherein an inner surface of the frame (43) is at least partially curved (433) in a cross-section, said cross-section being viewed in a plane perpendicular to said floor.

9. A dispenser (1) according to any one of the preceding claims, wherein the top part (5), in the covering state, is snap locked to said bottom part (4).

## Patentansprüche

1. Spender (1) für trockenes Lebensmittel, umfassend
einen Behälter (2) zum Enthalten des Lebensmittels, wobei der Behälter (2) eine Öffnung (21) aufweist und
eine Verschlussanordnung (3), die einen unteren Teil (4) und einen oberen Teil umfasst (5), die voneinander trennbar sind, der untere Teil (4) der Verschlussanordnung (3) ist so angeordnet, dass er die Öffnung (21) des Behälters (2) zumindest teilweise bedeckt,
wobei der untere Teil (4) einen Boden (42) mit mindestens einer Öffnung (41), die mit der Öffnung (21) des Behälters (2) ausgerichtet ist, umfasst, damit Lebensmittel durch die Öffnung (41) abgegeben werden können, und einem Rahmen (43), der entlang eines Umfangsabschnitts des Bodens (42) angeordnet ist,
wobei der obere Teil (5) der Verschlussanordnung (3) in einem abdeckenden Zustand an dem unteren Teil (4) angebracht werden kann, wodurch verhindert wird, dass Lebensmittel aus dem Spender (1) abgegeben werden, wobei Lebensmittel von dem Spender (1) abgegeben werden können, wenn der obere Teil (5) vom unteren Teil (4) entfernt wird
wobei,
der untere Teil (4) ferner einen Gewindeabschnitt (45) umfasst, der sich vom Boden (42) in die entgegengesetzte Richtung des Rahmens (43) erstreckt, der Gewindeabschnitt (45) umfasst ferner Innengewinde, um es dem unteren Teil (4) zu erlauben, auf den Behälter (2) geschraubt zu werden, wobei der Rahmen (43) eine Höhe aufweist, die entlang der Umfangsausdehnung des Rahmens (43) variiert,
wobei der obere Teil (5) eine Außenwand (51) umfasst, die sich von einer oberen Oberfläche (52) erstreckt, wobei die Außenwand (51) mit dem unteren Teil (4) in dem abdeckenden Zustand in Kontakt steht, und wobei der obere Teil (5) ferner eine Innenwand (54) umfasst, die sich von der oberen Oberfläche (52) erstreckt, einen geschlossenen Weg bildet und ein Volumen einschließt, wobei ein Raum (55) zwischen der Innenwand (54) und der Außenwand (51) bereitgestellt wird.

2. Spender (1) nach Anspruch 1, wobei sich der Rahmen (43) um die gesamte Öffnung (41) im Boden (42) des unteren Teils (4) erstreckt.

3. Spender (1) nach Anspruch 1 oder 2, wobei der Rahmen (43) im abdeckenden Zustand in dem Raum (55) zwischen der Innenwand (54) und der Außenwand (51) des Oberteils (5) angeordnet ist.

4. Spender (1) nach einem der Ansprüche 1 bis 3, wobei die Innenwand (54) im abdeckenden Zustand mit dem Boden (42) des unteren Teils (4) der Verschlussanordnung (3) in Kontakt steht um eine Barriere gegen Lebensmittel, die durch die Öffnung (41) ausgetreten sind, zu bilden.

5. Spender (1) nach einem der Ansprüche 1 bis 4, wobei das durch die Innenwand (54) definierte Volumen ein Volumenmaß ist, wie beispielsweise ein Teelöffelmaß, in das das Lebensmittel abgegeben werden kann.

6. Spender (1) nach einem der vorhergehenden Ansprüche, wobei die mindestens eine Öffnung (41) eine einzelne Öffnung ist, deren Mitte nicht mit einer Mitte des Bodens (42) des unteren Teils (4) zusammenfällt.

7. Spender (1) nach einem der Ansprüche 1 bis 5, wobei der untere Teil (4') mehrere Öffnungen (41') umfasst.

8. Spender (1) nach einem der vorhergehenden Ansprüche, wobei eine Innenfläche des Rahmens (43) in einem Querschnitt zumindest teilweise gekrümmt ist (433), wobei der Querschnitt in einer Ebene senkrecht zu dem Boden betrachtet wird.

9. Spender (1) nach einem der vorhergehenden Ansprüche, wobei der obere Teil (5) im abdeckenden Zustand mit dem unteren Teil (4) einrastbar ist.

## Revendications

1. Distributeur (1) pour produit alimentaire sec, comprenant
un récipient (2) pour contenir ledit produit alimentaire, ledit récipient (2) ayant une ouverture (21), et
un agencement de fermeture (3) comprenant une partie inférieure (4) et une partie supérieure (5) étant séparables l'une de l'autre, la partie inférieure (4) de l'agencement de fermeture (3) est agencée pour couvrir au moins partiellement l'ouverture (21) du récipient (2),
dans lequel la partie inférieure (4) comprend un plancher (42) ayant au moins un orifice (41) aligné avec l'ouverture (21) du récipient (2) pour permettre la distribution de produit alimentaire à travers l'orifice (41), et un cadre (43) agencé le long d'une partie périphérique du plancher (42),
dans lequel la partie supérieure (5) de l'agencement de fermeture (3) peut être fixée à la partie inférieure (4) dans un état de recouvrement, empêchant ainsi la distribution de produit alimentaire du distributeur (1),
dans lequel le produit alimentaire peut être distribué du distributeur (1) lorsque la partie supérieure (5) est retirée de la partie inférieure (4)
dans lequel,
la partie inférieure (4) comprend en outre une partie filetée (45), s'étendant depuis le plancher (42) dans le sens opposé au cadre (43), cette partie filetée (45) comprend des filets à l'intérieur, pour permettre à la partie inférieure (4) d'être vissée sur le récipient (2),
dans lequel le cadre (43) a une hauteur qui varie le long de l'extension circonférentielle du cadre (43),
dans lequel la partie supérieure (5) comprend une paroi extérieure (51) s'étendant depuis une surface supérieure (52), dans lequel la paroi extérieure (51) est en contact avec la partie inférieure (4) dans ledit état de recouvrement, et dans lequel la partie supérieure (5) comprend en outre une paroi intérieure (54) s'étendant depuis ladite surface supérieure (52), formant un chemin fermé et enfermant un volume, dans lequel un espace (55) est prévu entre la paroi intérieure (54) et ladite paroi extérieure (51).

2. Distributeur (1) selon la revendication 1, dans lequel le cadre (43) s'étend autour de tout l'orifice (41) dans le plancher (42) de la partie inférieure (4).

3. Distributeur (1) selon la revendication 1 ou 2, dans lequel le cadre (43), dans l'état de recouvrement, est agencé dans l'espace (55) entre la paroi intérieure (54) et la paroi extérieure (51) de la partie supérieure (5).

4. Distributeur (1) selon l'une quelconque des revendications 1 à 3, dans lequel la paroi intérieure (54), dans l'état de recouvrement, est en contact avec le plancher (42) de la partie inférieure (4) de l'agencement de fermeture (3), pour former une barrière à tout produit alimentaire qui est sorti par l'orifice (41).

5. Distributeur (1) selon l'une quelconque des revendications 1 à 4, dans lequel le volume défini par la paroi intérieure (54) est une mesure de volume, telle qu'une mesure de cuillère à café, dans laquelle le produit alimentaire peut être distribué.

6. Distributeur (1) selon l'une quelconque des revendications précédentes, dans lequel l'au moins un orifice (41) est un seul orifice qui a un centre qui ne coïncide pas avec un centre du plancher (42) de la partie inférieure (4).

7. Distributeur (1) selon l'une quelconque des revendications 1 à 5, dans lequel la partie inférieure (4') comprend une pluralité d'orifices (41').

8. Distributeur (1) selon l'une quelconque des revendications précédentes, dans lequel une surface intérieure du cadre (43) est au moins partiellement incurvée (433) en coupe transversale, ladite couple transversale étant vue dans un plan perpendiculaire audit plancher.

9. Distributeur (1) selon l'une quelconque des revendications précédentes, dans lequel la partie supérieure (5), dans l'état de recouvrement, est verrouillée par encliquetage à ladite partie inférieure (4).
